# EUROPEAN PATENT APPLICATION

(11) **EP 2 050 636 A1**
(43) Date of publication of application: **22.04.2009**
(21) Application number: 08166717.2
(22) Date of filing: 15.10.2008
(51) Int. Cl.: B60R 25/00, G07C 9/00

(54) **Vehicle Security System**

(30) Priority: 17.10.2007 JP 2007270361
(71) Applicant: Kabushiki Kaisha Tokai-Rika-Denki-Seisakusho, Niwa-gun, Aichi 480-0195 (JP)
(72) Inventor: Tatebayashi, Chihiro c/o K.K Tokai Rika Denki, Niwa-gun, Aichi 480-0195 (JP); Arakawa, Kazunori c/o K.K Tokai Rika Denki, Niwa-gun, Aichi 480-0195 (JP); Hiramatsu, Toshiki c/o K.K Tokai Rika Denki, Niwa-gun, Aichi 480-0195 (JP)
(74) Representative: Sherrard-Smith, Hugh

(57) **Abstract**

A vehicle security system (1) for improving security. A portable device (10) generates a wireless signal containing a first ID code. A verification device (21) stores a second ID code and a first control ID code, receives the wireless signal from the portable device (10) and performs verification with the first and the second ID codes. A controller (31) stores a second control ID code, receives the first control ID code from the verification device (21), and performs verification with the first and the second control ID codes. The controller (31) controls a control subject (32) such as a door lock when verification of the first and second ID codes and verification of the first and second control ID codes are established, When a deletion operation is performed, the second ID code is deleted from the verification device (21) and the first or second control ID code is invalidated.

## Description

The present invention relates to a vehicle security system.

Nowadays, in addition to basic performance and safety, the security level must be increased for automobiles. A vehicle security system is used to increase the security level. In such a system, wireless communication is automatically carried out between a portable device, which is carried by a user, and an in-vehicle device (verification device). The opening and closing of a door lock is automatically performed when wireless communication is established. Japanese Laid-Open Patent Publication No. 2001-311333 describes such a vehicle security system.

Specifically, an in-vehicle device intermittently transmits a wireless signal (request signal) to an area near the vehicle. When the request signal is transmitted to the area near the vehicle, the request signal is transmitted to a predetermined region (vehicle exterior region). Therefore, when a user (e.g., driver) carrying the portable device, which implements a communication function, enters the vehicle exterior region, the portable device receives the request signal, and returns an ID code signal containing an ID code in response, which is set for the portable device. The in-vehicle device receives the ID code signal and verifies the received ID code with an ID code set for the in-vehicle device. The in-vehicle device determines that communication with the portable device is established when the ID codes match and provides an unlock permission signal to a controller of the door lock. In this manner, communication is automatically carried out between the portable device and the in-vehicle device, and the door lock opens when communication is established. Thus, troublesome operations such as using a mechanical key to open or close the door lock are unnecessary. This improves the operability of the vehicle. Furthermore, the security level is improved since the locking and unlocking of the door is controlled through electrical verification.

In a vehicle security system, if a portable device is lost, a new portable device can be used. In such a case, the user performs a predetermined deletion operation to delete the ID code of each portable device registered in the in-vehicle device and performs a predetermined registration operation to register the ID code of the new portable device in the in-vehicle device. This enables the locking and unlocking of the door with the new portable device.

In the prior art, however, a person who is not the owner of the vehicle may prepare a new portable device and perform the deletion operation and the registration operation to unlock the door and enter the vehicle. Therefore, further improvement in security is desired.

The above-described problem is not limited to a door lock and also arises in other control subjects controlled through ID code communication between a portable device and in-vehicle device.

The present invention provides a vehicle security system that improves security.

One embodiment of the present invention is a vehicle security system for use in a vehicle. The system includes a control subject installed in the vehicle. A portable device generates a wireless signal containing a first ID code. A verification device stores a second ID code and a first control ID code, receives the wireless signal from the portable device, and performs verification with the first and second ID codes. A controller stores a second control ID code, receives the first control ID code from the verification device, and performs verification with the first and second control ID codes. The controller controls the control subject when verification of the first and second ID codes is established and verification of the first and second control ID codes is established. The verification device deletes the second ID code from the verification device when a deletion operation is performed and invalidates at least either one of the first and second control ID codes.

Other embodiments and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic diagram of a vehicle security system;
Fig. 2 is a schematic flowchart of a door lock control executed by the vehicle security system; and
Fig. 3 is a schematic flowchart of a registration process of a portable device executed by the vehicle security system.

In the drawings, like numerals are used for like elements throughout.

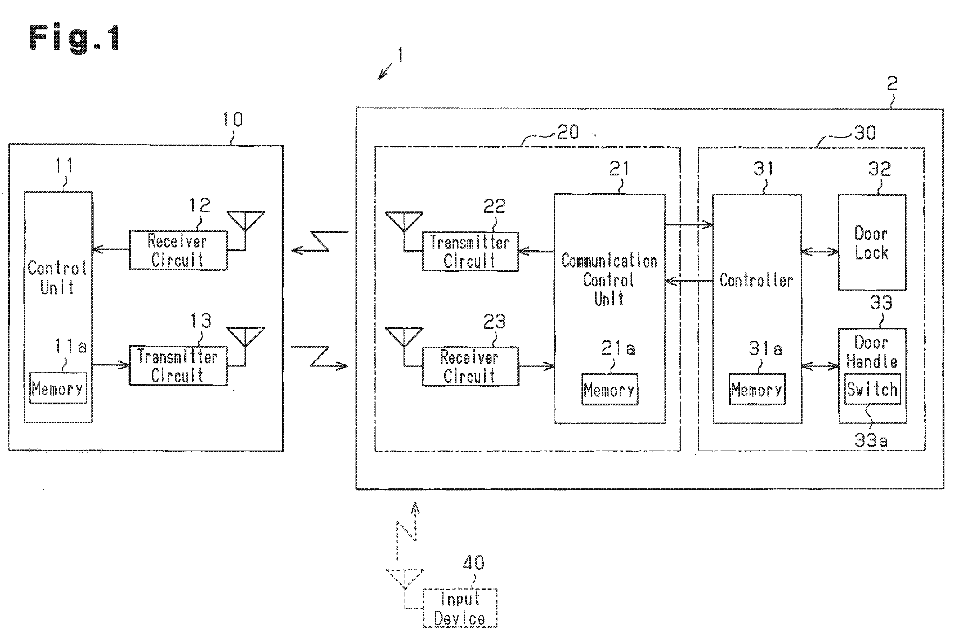

A preferred embodiment of vehicle security system 1 according to the present invention will now be discussed with reference to Figs. 1 to 3. The vehicle security system 1 controls, for example, the opening and closing of a door lock.

As shown in Fig. 1, the vehicle security system 1 includes a portable device 10 carried by an owner (e.g., user) of a vehicle 2, an in-vehicle device 20 serving as a verification device, and a door lock device 30 arranged in the vehicle 2. Communication is automatically carried out between the portable device 10 and the in-vehicle device 20, and the door lock device 30 is controlled when communication is established.

### <Structure of Portable Device 10>

The portable device 10 implements a wireless communication function and is communicable with the in-vehicle device 20. Specifically, the portable device 10 includes a control unit 11, which is a computer unit including a CPU, ROM, and RAM. The portable device 10 also includes a receiver circuit 12 and a transmitter circuit 13 electrically connected to the control unit 11.

When receiving a wireless signal (request signal) from the in-vehicle device 20, the receiver circuit 12 demodulates the request signal to a pulse signal. Then, the receiver circuit 12 provides the pulse signal to the control unit 11.

The control unit 11 includes a non-volatile memory 11a, which records a predetermined unique ID code (first ID code). When receiving a demodulated signal from the receiver circuit 12, the control unit 11 provides an ID code signal, which contains the ID code recorded in the memory 11a, to the transmitter circuit 13.

When receiving the ID signal from the control unit 11, the transmitter circuit 13 modulates the ID code signal to a wireless signal having a predetermined frequency and transmits the wireless signal.

The vehicle security system 1 may include a plurality of portable devices 10 for the same vehicle depending on, for example, the number of users. In the following discussion, it is assumed that there are a plurality of portable devices 10.

### <Structure of In-Vehicle device 20>

The in-vehicle device 20 includes a communication control unit 21, which is a computer unit including a CPU, ROM, and RAM. The in-vehicle device 20 also includes a transmitter circuit 22 and a receiver circuit 23, which are electrically connected to the communication control unit 21.

When receiving a request signal from the communication control unit 21, the transmitter circuit 22 modulates the request signal to a wireless signal having a predetermined frequency and transmits the wireless signal to a predetermined region outside the vehicle 2.

When receiving a wireless signal from the portable device 10, the receiver circuit 23 demodulates the wireless signal to a pulse signal. Then, the receiver circuit 23 provides the pulse signal to the communication control unit 21.

The communication control unit 21 includes a non-volatile memory 21a, which records a plurality of ID codes (second ID codes) that are identical to the ID codes set for the plurality of portable devices 10. Each of the ID codes recorded in the memory 21a serves as a second ID code of the present invention. The memory 21a also records a door lock ID code (first control ID code), which is unique to the vehicle 2. The communication control unit 21 is electrically connected to the door lock device 30. When a predetermined deletion operation is performed on the in-vehicle device 20, the communication control unit 21 deletes the ID codes of each portable device 10 registered in the in-vehicle device 20. Further, when a predetermined registration operation is performed on the in-vehicle device 20, the communication control unit 21 stores the ID code of a new portable device in the in-vehicle device 20. The deletion operation and the registration operation can be performed in any manner, and the present invention does not limit the procedures for such operations in any manner.

The communication control unit 21 intermittently provides a request signal to the transmitter circuit 22. When the receiver circuit 23 receives an ID code signal in response to the request signal transmitted from the transmitter circuit 22, the communication control unit 21 performs a comparison of the ID code contained in the ID code signal with an ID code registered in the memory 21a (hereinafter referred to as "ID code verification"). The communication control unit 21 executes door lock control based on the comparison. Specifically, the communication control unit 21 provides an unlock signal containing a door lock ID code to the door lock device 30 if the ID code verification is established, and provides a lock signal containing the door lock ID code to the door lock device 30 if the ID code verification is not established.

### <Structure of Door Lock Device 30>

The door lock device 30 includes a door lock 32 and a controller 31, which controls the door lock 32. The door lock device 32 automatically opens and closes the door lock 32, which serves as a control subject. The controller 31 includes a non-volatile memory 31a. The memory 31a records a door lock ID code (second control ID code) that is identical to the door lock ID code recorded in the memory 21a of the communication control unit 21.

When receiving the unlock signal or the lock signal from the communication control unit 21, the controller 31 performs a comparison of the door lock ID code contained in the unlock signal or lock signal with the door lock ID code recorded in the memory 31a (hereinafter referred to as "door lock ID verification"). The controller 31 opens the door lock 32 if the door lock ID code verification is established when receiving the unlock signal and closes the door lock 32 if the door lock ID code verification is established when receiving the lock signal. The controller 31 then provides the communication control unit 21 with a status signal indicating the open or closed state of the door lock 32.

A door handle 33 is arranged on a door (not shown) of the vehicle 2. The door handle 33 includes a switch 33a. The door handle 33 is used when opening and closing the door. The controller 31 is electrically connected to the door handle 33.

### <Lock/Unlock operation>

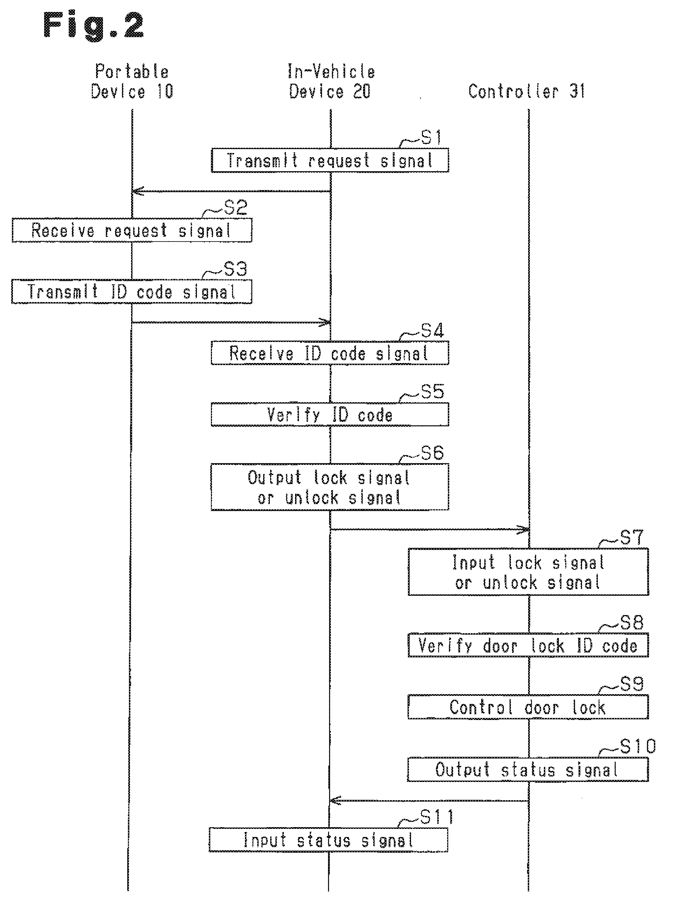

The door lock control executed by the vehicle security system 1 will now be discussed with reference to the sequence chart shown in Fig. 2.

As shown in Fig. 2, the in-vehicle device 20 intermittently transmits the request signal to a predetermined region outside the vehicle 2 in predetermined cycles (step S1). The portable device 10 receives the request signal (step S2), and transmits the ID code signal containing the ID code in response to the request signal (step S3).

The in-vehicle device 20 receives the ID code signal (step S4) and performs ID code verification (step S5). The in-vehicle device 20 determines that the portable device 10 is located in the predetermined region outside the vehicle 2 upon establishment of the ID code verification and then provides the door lock device 30 with the unlock signal containing the door lock ID code (step S6). The in-vehicle device 20 determines that the portable device 10 is not located in the predetermined region outside the vehicle 2 if the ID code verification is not established and then provides the lock signal containing the door lock ID code to the door lock device 30 (step S6).

The controller 31 receives the unlock signal or the lock signal (step S7) and then performs the door lock ID code verification (step S8). The controller 31 opens or closes the door lock 32 only if the door lock code verification is established (step S9). Specifically, the controller 31 opens the door lock 32 when receiving the unlock signal and closes the door lock 32 when receiving the lock signal. The controller 31 provides the communication control unit 21 with the status signal indicating the open or closed state of the door lock 32 (step S10). Then, the in-vehicle device 20 receives the status signal (step S11).

### <registration Process for New Portable Device>

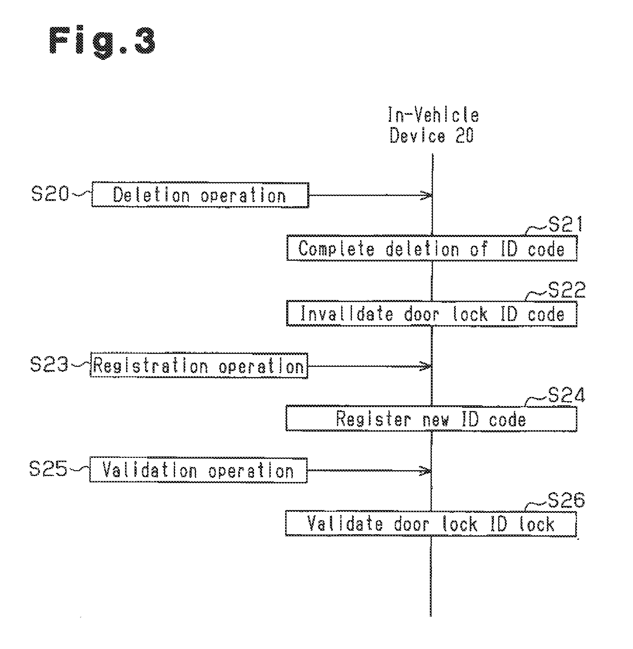

If a portable device is lost, a new portable device is registered to the vehicle security system 1. In this case, the in-vehicle device 20 first performs a deletion process to delete the ID code of each portable devices 10 registered in the device 20. Then, the in-vehicle device 20 performs a registration process to register the new portable device in the device 20. The deletion process and the registration process will be discussed with reference to Fig. 3.

As shown in Fig. 3, when the deletion operation is performed on the in-vehicle device 20 (step S20), the in-vehicle device 20 deletes each of the ID codes stored in the memory 21a of the communication control unit 21 (step S21). Thus, the ID code verification can no longer be established in the communication control unit 21. That is, the door lock device 30 cannot be controlled with the ID code of the portable device 10 registered in the in-vehicle device 20.

Then, the in-vehicle device 20 invalidates the door lock ID code stored in the memory 21a of the communication control unit 21 (step S22). Thus, the unlock signal and lock signal can no longer be provided from the communication control unit 21 of the in-vehicle device 20 to the controller 31 of the door lock device 30. Therefore, the communication control unit 21 cannot control the door lock device 30.

Next, the registration process is performed on the in-vehicle device 20 (step S23), the in-vehicle device 20 registers the ID code of the new portable device in the memory 21a of the communication control unit 21 (step S24).

Subsequently, a validation operation for validating the door lock ID code stored in the memory 21a of the communication control unit 21 from the invalid state is performed on the in-vehicle device 20 (step S25). The validation operation is performed by carrying out procedures in which the switch 33a on the door handle 33 of the vehicle 2 (see Fig. 1) is pushed at predetermined intervals and for a predetermined number of times. The validation operation is performed on a vehicle device (here, the switch 33a) to provide the in-vehicle device 20 with a specific operation command. The present invention does not limit the procedures of the validation operation in any manner. When the validation operation is performed, the communication control unit 21 validates the door lock ID code (step S26). This enables the door to be locked and unlocked by the new portable device.

The vehicle security system 1 of one embodiment has the following advantages.
(1) The vehicle security system 1 performs the door lock ID code verification with the in-vehicle device 20 and the controller 31 (door lock device 30) in addition to the ID code verification with the portable device 10 and the in-vehicle device 20. In this case, the controller 31 controls the door lock 32 only when the ID code verification and the door lock ID code verification are both established. Therefore, the door lock 32 cannot be controlled even if a third person who is not the owner of the vehicle 2 acquires either the portable device ID code or the door lock ID code through one way or another. In the system 1, the door lock ID code of the in-vehicle device 20 is invalidated when the deletion operation is performed. Therefore, the door lock 32 cannot be controlled even if the third person who is not the owner of the vehicle 2 prepares a new portable device and performs the deletion operation and the registration operation. This improves security.
(2) After the deletion operation invalidates the door lock ID code of the in-vehicle device 20, when the validation operation is performed, the communication control unit 21 validates the door lock ID code from the invalid state. Thus, the door lock 32 can control the in-vehicle device 20 with the newly registered portable device. Accordingly, even if the user loses a portable device, the user can lock or unlock the door with a new portable device. As a result, security is improved without affecting convenience.
(3) In the preferred embodiment, after the registration operation is performed to store the new ID code, the door lock ID code is validated by performing the validation operation. Accordingly, once ID codes are deleted from the in-vehicle device 20 by the deletion operation, the validation operation for the door lock ID code cannot be performed unless the registration operation is performed to store a new ID code. Thus, the door lock 32 cannot be controlled unless operations are performed in the correct order. This further improves security.
(4) The validation operation is performed by carrying out predetermined procedures with the door handle 33 of the vehicle 2 (e.g., pushing the switch 33a on the door handle 33 at predetermined intervals for a predetermined number of times). Accordingly, without adding any new device, the in-vehicle device 20 can recognize that the validation operation has been performed when the predetermined procedures are carried out with the existing vehicle device (switch 33a).

The present examples and embodiments are to be considered as illustrative and not restrictive, and the invention is not to be limited to the details given herein, but may be modified within the scope and equivalence of the appended claims.

In the preferred embodiment, based on the wireless signal transmitted from the portable device 10 to the in-vehicle device 20, the unlock control is executed when the ID code verification is established, and the lock control is executed when the ID code verification is not established. However, when an unlock signal or lock signal is transmitted from the portable device 10 to the in-vehicle device 20, the in-vehicle device 20 may control the opening and closing of the door lock 32 based on the unlock signal or lock signal from the portable device 10 and the verification result of the ID codes.

In the preferred embodiment, the validation operation is not limited to procedures performed on a vehicle device (door handle 33 of the vehicle 2). The in-vehicle device 20 may perform communication (wireless or wired) with a separate external device and receive a signal corresponding to the validation operation from the external device. That is, the validation operation of the present invention includes contact operations performed on a vehicle device and non-contact operations performed on the in-vehicle device 20. For example, as shown in Fig. 1, the communication control unit 21 of the in-vehicle device 20 may receive a wireless signal containing a unique validation code from an input device 40, which implements a wireless communication function. The door lock ID code is validated by the received validation code. In this example, the door lock ID code of the in-vehicle device 20 cannot be validated regardless of how a third person operates the door lock device 30 of the vehicle 2 since a separate external device (i.e., input device 40) is required. This further improves security. The input device 40 is not limited to wireless communication and may performed wired communication.

In the preferred embodiment, registration of a new ID code (step S23) in accordance with the registration operation (step S24) may be performed after the door lock ID code is validated (step S26) in accordance with the validation operation (step S25).

In the preferred embodiment, the door lock ID code (control ID code) is invalidated by performing the deletion operation. Thus, if the portable device 10 is lost, a person who is not the owner of the vehicle 2 cannot control the door lock 32 (control subject) with the portable device 10 even if that person uses the lost portable device 10. Accordingly, the registration operation and the validation operation may be omitted.

In the preferred embodiment, during the deletion operation the door lock ID code stored in the controller 31 may be invalidated instead of invalidating the door lock ID code stored in the communication control unit 21. Further, the door lock ID codes stored in the communication control unit 21 and the controller 31 may both be invalidated.

The vehicle security system of the preferred embodiment is not limited to door lock opening and closing control of the door lock and is also applicable to engine starting control. Specifically, when starting the engine, the communication control unit 21 compares the ID code of the portable device 10 with the ID code of the communication control unit 21. If the ID codes match, the communication control unit 21 provides an engine controller with a signal enabling the engine to start. If the user loses the portable device 10, the user can start the engine with a new portable device by performing the deletion operation and the registration operation in the same manner as described above. This improves security in an engine starting device. Further, the control subject of the vehicle security system according to the present invention is not limited to such an engine starting device and may be any other device installed in the vehicle 2.

The present examples and embodiments are to be considered as illustrative and not restrictive, and the invention is not to be limited to the details given herein, but may be modified within the scope and equivalence of the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A vehicle security system (1) for use in a vehicle (2), the system **characterized by:**
a control subject (32) installed in the vehicle;
a portable device (10) which generates a wireless signal containing a first ID code;
a verification device (21) which stores a second ID code and a first control ID code, receives the wireless signal from the portable device (10), and performs verification with the first and second ID codes; and
a controller (31) which stores a second control ID code, receives the first control ID code from the verification device (21), and performs verification with the first and second control ID codes, the controller (31) controlling the control subject (32) when verification of the first and second ID codes is established and verification of the first and second control ID codes is established;
wherein the verification device (21) deletes the second ID code from the verification device (21) when a deletion operation is performed and invalidates at least either one of the first and second control ID codes.

2. The vehicle security system according to claim 1, **characterized in that** the verification device (21) stores a new second ID code when a registration operation is performed and validates the first and second control ID codes when a validation operation is performed so that the control subject (32) becomes controllable with the new second ID code.

3. The vehicle security system according to claim 2,
**characterized in that,** the verification device (21) invalidates the validation operation until the registration operation stores the new second ID code in the verification device (21).

4. The vehicle security system according to claim 2,
**characterized in that:**
the vehicle includes a vehicle device (33) which undergoes a predetermined operation; and
the verification device (21) recognizes the predetermined operation performed on the vehicle device as the validation operation.

5. The vehicle security system according to claim 2, further **characterized by:**
an external device (40) communicable with the verification device (21);
wherein the verification device (21) performs communication with the external device and receives a signal corresponding to the validation operation from the external device.
